# EUROPEAN PATENT APPLICATION

(11) **EP 1 065 864 A1**
(43) Date of publication of application: **03.01.2001**
(21) Application number: 00113675.3
(22) Date of filing: 28.06.2000
(51) Int. Cl.: H04M 1/57, H04M 1/56

(54) **Telephone with audible caller identification and directory number confirmation**

(30) Priority: 30.06.1999 JP 18687599
(71) Applicant: Pioneer Corporation, Tokyo 153-0063 (JP)
(72) Inventor: Yoshida, Masao, c/o Pioneer Corporation, Kawagoe-shi, Saitama 350-0822 (JP)
(74) Representative: Grünecker, Kinkeldey, Stockmair & Schwanhäusser Anwaltssozietät

(57) **Abstract**

A telephone enabling a user to promptly recognize the other party of the incoming and also enabling a user to promptly recognize the completion of a retrieval of an optional phone number having registered thereto is provided, which includes a storing means for storing phone numbers and a retrieving means for retrieving an optional phone number out of the phone numbers stored in the storing means, wherein a retrieving tone to be given out at a retrieval correspondingly to the optional phone number agrees with an incoming tone to inform of an incoming from a party having the optional phone number.

## Description

### BACKGROUND OF THE INVENTION

### 1. Field of the Invention

The present invention relates generally to a phone number registrable and retrievable telephone, and more particularly to a telephone which can register a plurality of phone numbers thereto and has a telephone directory function for retrieving the registered phone numbers.

### 2. Description of the Related Art

In recent years, a PHS (i.e. a portable handyphone system) or a mobile telephone (hereinafter, a mobile telephone) capable of making a communication while walking or in a train has rapidly spread. Some of these mobile telephones are capable of registering several hundreds of phone numbers of the other parties thereto and also have a telephone directory function for indicating a reference list for the registered phone numbers.

This telephone directory function is, for example, of a function wherein a user registers phone numbers to the telephone in advance and the registered phone numbers can be indicated on an indicating portion by operating UP/DOWN keys or the like provided on an operating panel. And, when an optional phone number is indicated on the indicating portion by the use of the telephone directory function, a call button is to be pushed. Or, if a plurality of phone numbers are indicated on the indicating means, the call button is shall be pushed after designating one phone number. By using this function, a user can call the other party without inputting a phone number.

And, there is an incoming indicating function, for indicating a phone number of a received call, as another function using the telephone directory function. This is a function of indicating a phone number of the other party on the indicating portion along with giving out an incoming tone when the mobile telephone has received a call, i.e., has got an incoming, from the other party whose phone number had been registered thereto.

Besides, an incoming tone setting function for selecting an incoming tone to inform of the incoming is provided on some of the mobile telephones. This function is a user can selects and sets one favorable incoming tone out of a plurality of incoming tones having registered to a mobile telephone. This incoming tone setting function enable a user to make and register melodies to be used for incoming tones. With the above functions, a user can listen to an incoming tone having been set or made by himself when he receives a call, which enables the user to recognize that his own mobile telephone is receiving a call.

With respect to the above-described telephone directory function, the incoming indicating function, and the incoming tone setting function, however, there functions do not have a user recognize the other party until he looks at the indicating portion or starts talking with the other party. And, there is a problem that it is not easy to read the indication of the phone number of a received call on the very small indicating portion.

There is also a problem that it is not easy to read the indication of the registered phone number on the very small indicating portion.

### SUMMARY OF THE INVENTION

In view of the foregoing, an object of the present invention is to provide a telephone which has a user promptly recognize the other party of the incoming and also has a user promptly recognize the completion of a retrieval of an optional phone number having registered thereto.

In order to achieve the above-described object, as a first aspect of the present invention, a telephone comprises: a storing means for storing phone numbers; and a retrieving means for retrieving an optional phone number out of the phone numbers stored in the storing means, wherein a retrieving tone ("tone" includes "sound" in the present specification) to be given out at a retrieval correspondingly to the optional phone number agrees with an incoming tone to inform of an incoming from a party having the optional phone number.

As a second aspect of the present invention, in the structure with the above first aspect, the telephone further comprise: an indicating means for indicating at least either one or both of a phone number and individual information related to the phone number, wherein the indicating means indicates at least either one or both of the phone number and the individual information related to the phone number at the retrieval or at the incoming.

As a third aspect of the present invention, in the structure with the above second aspect, a plurality of marks capable of being indicated on the indicating means are pre-stored, and the marks have respective retrieving tones to be different to each other and are registered correspondingly to the phone numbers stored in the storing means so that the phone numbers have the respective retrieving tones being same as respective incoming tones.

According to the above-described structure of the present invention, the following advantages are provided.
(1) Because a retrieving tone to be given out upon retrieval correspondingly to a retrieving phone number and an incoming tone to be given out upon incoming from the other party of the above phone number are agreed with each other, a user can strongly recognize the agreement between the retrieving tone for the phone number stored in the storing means and the incoming tone. And, because a user can strongly recognize the agreement between the retrieving tone and the incoming tone, when a user makes a phone call by the use of the telephone directory function, the retrieval of the phone number can be promptly recognized by listening to the corresponding retrieving tone. And, because the incoming tone which agrees with the retrieving tone can be listened to, the other party to whom the retrieving tone is given can be promptly recognized only by listening to the incoming tone.
(2) A user can securely confirm the phone number of the incoming call or its individual information by checking at least either one or both of the phone number indicated on the indicating means at the incoming and the individual information related to the phone number.
(3) Because a retrieving tone corresponding to the mark is generated, a user can promptly recognize the other party of the phone number only by listening to the retrieving tone without looking at the indication on the indicating portion.

The above and other objects and features of the present invention will become more apparent from the following description taken in conjunction with the accompanying drawings.

### BRIEF DESCRIPTION OF THE DRAWINGS

FIG. 1 is a block diagram of main portions of an embodiment of a telephone in accordance with the present invention;
FIG.2A is a table showing a matrix of kana characters to be input by operating dial buttons;
FIG.2B is a table showing a matrix of English letters to be input by operating dial buttons;
FIG.3 is a memory table of a memory;
FIG.4 is a schematic diagram showing a musical scale of each of tones constituting a music scale data;
FIG.5 is a flow chart showing a flow of the control operation carried out by a micro computer when a user retrieves the reference list; and
FIG.6 is a flow chart showing a flow of the control operation carried out by the micro computer when the telephone received a call.

### DESCRIPTION OF THE PREFERRED EMBODIMENT

An embodiment of the present invention will now be described in further detail with reference to the accompanying drawings.

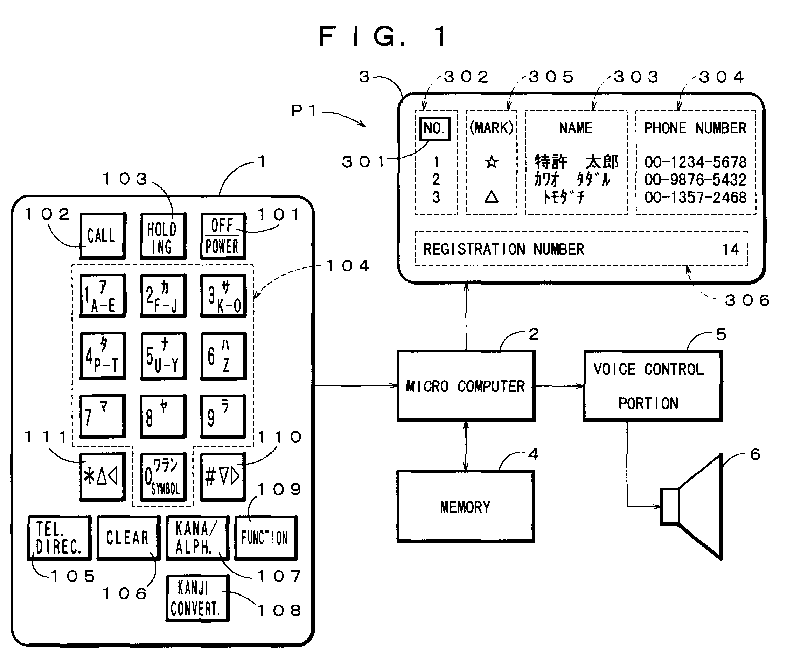

FIG. 1 is a block diagram of main portions of an embodiment of a telephone in accordance with the present invention, which is applicable to a home telephone or to a mobile telephone (hereinafter, a telephone). First, based on FIG.1, the function and an operating method are described hereinafter.

As shown in FIG.1, a telephone P1 has a operating panel 1 having a plurality of operating buttons enabling a user to carry out various operations, a micro computer 2, an indicating portion 3, of a liquid crystal panel, as an indicating means to indicate various information, a memory 4 as a storing means, a voice control portion 5, and a speaker 6.

And, the telephone P1 have a transmitting-receiving portion to carry out communication with the other party, and a user can call the other party by inputting a phone number of the other party and a call command be operating buttons provided on the operating panel 1. In this case, a micro computer 2 receives output signals from the operating panel 1 and recognizes the operation carried out by the user. Based on the recognized result, the transmission is carried out by controlling the transmitting-receiving portion. The transmitting-receiving portion may use a well-known transmitting-receiving unit, and therefore its illustration is omitted.

When the transmitting-receiving portion has received a signal sent from the other party, an incoming signal is output to the micro computer 2 from the transmitting-receiving portion. In order to give out an incoming tone, the micro computer 2 received the incoming signal supplies an incoming tone data to a voice control portion 5. The voice control portion 5 converts the incoming tone data supplied from the micro computer 2 into an aural signal and supplies it to a speaker 6. And, the incoming tone for informing of the incoming from the other party is given out from the speaker 6.

When a user has operated various buttons of the operating panel 1 shown in FIG. 1, various output signals generated according to the respective buttons are supplied to the micro computer 2. The micro computer 2 controls various operations of the telephone P1 on receiving various output signals from the operating panel 1 and the transmitting-receiving portion. And also, the micro computer 2, by controlling the indicating portion 3, makes the indicating portion 3 indicate a transmission or reception state during transmitting or receiving, phone number, or name of the other party. And further, on the basis of various output signals from the operating panel 1, the micro computer 2 outputs various information to the memory 4 for memorization.

The memory 4 is divided into a RAM area and a ROM area. In the ROM area, stored in advance are programs for making the micro computer 2 carry out operation control such as the process of registration, revision, or deletion of the phone number and the process to call a registered phone number, standard retrieving tone data corresponding to later-described standard retrieving tones, and standard incoming tone data corresponding to standard incoming tones. And, in the RAM area, user registered phone numbers and a memory table to store other party information, as individual information, such as names of the other parties of the registered phone numbers are stored.

And, the micro computer 2 controls the voice control portion 5 in order for the speaker 6 to give out a tone according to the operation of the telephone P1. As cases of generating a tone, an incoming tone is given out at the reception and a retrieving tone is given out when retrieving (namely, looking up) a phone number or the other party information by the use of a reference list of a telephone directory function.

Next, the registration of a phone number and of the other party information as individual information related to the phone number, using the telephone directory function provided on the telephone P1, is described.

When a user inputs a phone number by operating dial buttons 104 of the operating panel 1, the micro computer 2 receives output signals generated by this operation and stores information basing the output signals in the memory table provided in the RAM area of the memory 4 by controlling the memory 4.

Similarly, when a user inputs the other party information as individual information related to a phone number by operating buttons such as the dial buttons 104, a kana/alphabet button 107, and a kanji converting button 108 of the operating panel 1, the micro computer 2 receives output signals generated by this operation and stores information basing the output signals, in connection with the above phone number, in the memory table provided in the RAM area of the memory 4 by controlling the memory 4.

A specific registration process will be describe later.

And, an individual mark can be registered to the telephone P1 correspondingly to a phone number when a phone number or individual information related to the phone number is registered. A mark (cf. 305 of FIG.1) is selected from a plurality of marks stored in the telephone P1 in advance, and the selected mark can be registered as the mark corresponding to the phone number.

The registered mark corresponding to the phone number is stored in the memory table in the RAM area of the memory 4 as a part of individual information related to the phone number. This mark is indicated on the indicating portion 3 along with the other party information such as a name of the other party corresponding to the phone number, as shown in FIG.1.

An optional classification according to the respective marks is possible due to the above mark registration, and the classified groups can be indicated on the indicating portion 3.

Whenever a phone number registered to the telephone P1 is retrieved by the use of the reference list of the above telephone directory function, the retrieving tone is generated for improving the operability. The standard retrieving tone of a short pulse sound is initially-set, which short pulse sound is given out from the speaker 6 by converting a standard retrieving tone data into an aural signal by the voice control portion 5 controlled by the micro computer 2. Besides, a user can register an optional melody as a retrieving tone for the phone number registered to the telephone.

When a user registers a melody as a retrieving tone, the melody is made by the use of the operating panel 1 and set correspondingly to the above the mark. That is, the retrieving tone data for the registered melody is stored in the memory table of The RAM area of the memory 4 correspondingly to the mark.

Accordingly, for example, when a user is retrieving a phone number registered to the telephone by using the reference list, the retrieving tone corresponding to the mark is given out in case that the mark is registered correspondingly to the phone number. Therefore, a user can recognize the other party of the phone number by listening to the retrieving tone without looking the indication on the indicating portion 3.

Namely, a user can recognize the other party of the phone number by only listening to the retrieving tone if the mark is registered only for one phone number. Accordingly, when a user calls an optional other party by the use of the reference list for retrieving the corresponding phone number by operating the operating panel 1, the phone number can be recognized without inputting the phone number by successively listening to the retrieving tones. And, a user can call the other party by pushing a call button 102 when he listened to the corresponding retrieving tone.

And, for example, in case that one mark is registered for a plurality of phone numbers, an optional phone number can be recognized as one of the phone numbers of a group classified according to the mark by listening to the retrieving tone corresponding the mark. Accordingly, when a user calls an optional other party of the group by the use of the reference list for retrieving the corresponding phone number by operating the operating panel 1, the phone number can be recognized as one of the phone numbers of the group without inputting the phone number by successively listening to the retrieving tones. And then, a user can easily find out the phone number and call the other party by pushing the call button 102.

Next, the incoming tone, which is given out when the telephone P1 detected the incoming, is described. When the transmitting-receiving portion has received a signal sent from the other party, an incoming signal is output to the micro computer 2 from the transmitting-receiving portion. In order to give out an incoming tone, the micro computer 2 received the incoming signal supplies an incoming tone data to the voice control portion 5. The voice control portion 5 converts the incoming tone data supplied from the micro computer 2 into an aural signal and supplies it to the speaker 6. And, the incoming tone for informing of the incoming from the other party is given out from the speaker 6.

When this incoming tone data is supplied to the voice control portion 5, the micro computer 2 judges first whether or not the received phone number of the other party is registered to the telephone P1. And, if the phone number is registered, the micro computer 2 judges whether a mark is registered for the phone number. And, if a mark is registered to the phone number, a retrieving tone data stored in the memory table of the RAM area of the memory 4 correspondingly to the mark is supplied to the voice control portion 5. The voice control portion 5 converts the supplied retrieving tone data into an aural signal and supplies it to the speaker 6.

The incoming tone to be given out of the speaker agrees with the retrieving tone of the phone number, which retrieving tone is given out when the phone number has been retrieved by using the telephone directory function.

If the received phone number is not registered to the telephone P1, or if a mark corresponding to the phone number is not registered even if the received phone number is registered to the telephone P1, the micro computer 2 supplies an incoming tone data corresponding to a standard incoming tone to the voice control portion 5, which standard incoming tone is initially-set to the telephone P1. And, the voice control portion 5 converts this incoming tone data into an aural signal and supplies it to the speaker 6, and the standard incoming tone is given out.

Hereinafter, the details of each portion of the telephone P1 is described.

As shown in FIG. 1, the operating panel 1 is provided with the power button 101 to make the power source of the telephone P1 be ON/OFF, the call button 102 to start a call with the other party by pushing it at the time of the transmission or at the reception, the holding button 103 to hold an incoming state from the other party, and input buttons such as dial buttons 104.

Besides, the operating panel 1 is provided with the telephone directory button 105 to indicate the phone numbers, which have been registered to the telephone P1, as the reference list onto the indicating portion 3 and also to carry out various operations using the reference list, the telephone directory button 105 to carry out various operations using the reference list, the clear button 106 to clear the contents stored in the RAM area of the memory 4, the kana/alphabet button 107 to set whether the input operation be carried out with the kana (i.e. the Japanese kana character) or with the English letter (i.e. the alphabet), the kanji converting button 108 to convert the kana into the kanji (i.e. the Chinese character), the function button 109 to register the phone number and the other party information as individual information related to the phone number to the telephone P1, the function button 109 to select a functional item for revising the contents regarding the registered phone number and of the registered other party information, and the UP-button 110 and the DOWN-button 111 to shift the marker 301 backward (i.e. UP) and forward (i.e. DOWN), respectively, which marker is indicated along with the reference list on the indicating portion 3 so as to select one phone number from the reference list.

The kana and the English letter in addition to numerals of 0-9 is stamped on the dial buttons 104 in order to register phone numbers or individual information and the like related to the phone numbers to the telephone P1. For example, as shown in FIG. 1, a kana 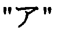 and English letters "A-E" in addition to a numeral "1" are stamped on the "1" button of the dial buttons 104. When a name of an other party corresponding to a phone number, for example, is registered as the character information, an input with the "1" button changes from/to a kana input to/from an English letter input whenever the kana/alphabet button 107 is pushed.

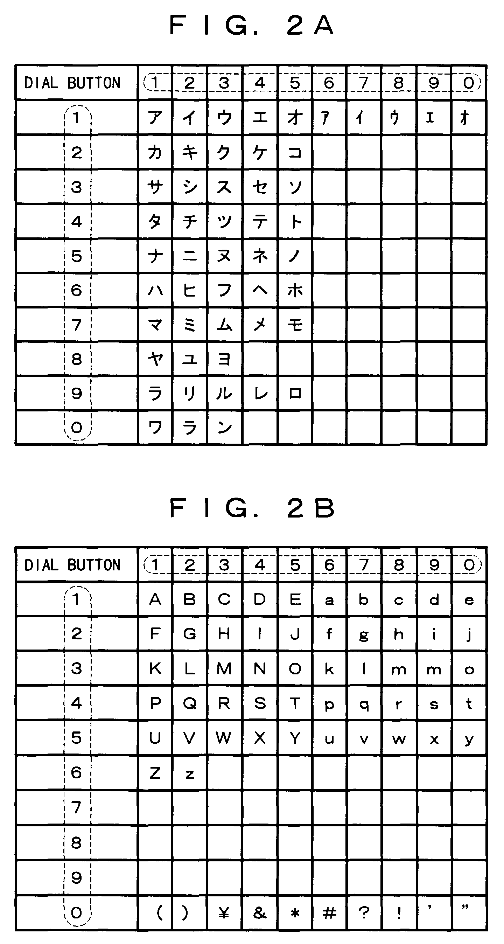

FIG.2A is a table showing a matrix of kana characters to be input by operating dial buttons 104, and FIG.2B is a table showing a matrix of English letters to be input by operating dial buttons 104, wherein the vertically arranged numbers indicate the dial buttons 104 and the horizontally arranged numbers indicate the number of pushing times of the buttons.

For example, for inputting a person's name 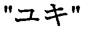 as the character information, 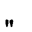 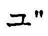 of the kana is firstly input by pushing "8" of the dial buttons 104 successively two times because 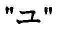 is disposed in the line 8 and in the column 2 in the table shown in FIG.2A, and then the second character 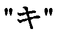 is input by pushing "2" of the dial buttons 104 successively two times after pushing the UP-button 110. The English letter can be input similarly to the case of the kana input for the registration to the telephone P1.

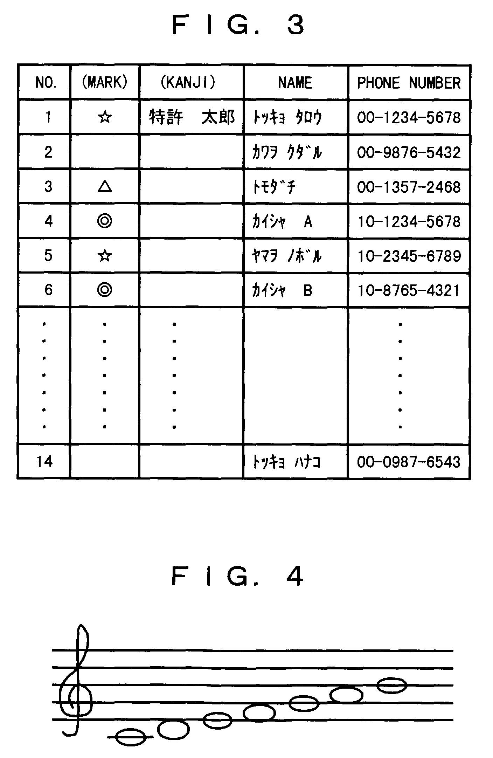

As mention above, the memory table, in which information to be used by the telephone directory function is stored, is provided in the RAM area of the memory 4. FIG.3 is the memory table of the memory 4.

As shown in FIG.3, stored in the memory table are phone number data registered to the telephone P1, names, for example, as the other party information as individual information related to the phone numbers, kanji data for the names, and data of the marks. These data are arranged correspondingly to the phone numbers.

The indicating portion 3 indicates the phone number in a transmission state or in a reception state in addition to an operating state by a user. And, individual information related to the phone number in a reception state is indicated on the indicating portion 3 in case that the phone number is registered to the telephone P1.

A mark is also indicated together if the mark is registered as the individual information related to the phone number.

As shown in FIG. 1, columns for the respective items to be indicated are provided on the indicating portion 3, which constitutes the reference list. That is; in the memory position column 302 indicated under "No." are numerals 1 to n (n ; positive integer) corresponding to the respective memory positions of information in the memory table in the RAM area of the memory 4, in the name column 303 indicated are names under 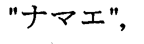 and in the phone number column 304 indicated are phone numbers under 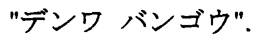 And, if the marks are registered correspondingly to phone numbers, they are indicated in the mark columns 305 correspondingly the phone numbers.

The names are indicated in kanji on the name column 303, when characters were input in kana and converted into kanji by means of the converting button 108.

And, the number of the registered phone number is indicated on the information column 306 of the indicating portion 3.

For example, three phone numbers along with their individual information can be indicated on the indicating portion 3 at once.

And the phone numbers and the respective individual information being indicated on the indicating portion 3 can be changed by operating the UP-button 110 and the DOWN-button 111 backward or forward. The marker 301 in the memory position column 302 indicates a selected object surrounding its numeral.

The marker 301 is located at "No." in the memory position column 302 when the reference list is firstly indicated and shifts to "1","2", "3",··· with the operation of the DOWN-button 111. If the DOWN-button 111 is further operated, "4" along with the other individual information appears on the indicating portion 3. At this time, the marker 301 surrounds "4".

When the memory positions of "2", "3", and "4" are indicated on the indicating portion 3 and when the marker 301 is on the memory position "2", if the UP-button 110 is operated, the memory positions "1", "2", and "3" are indicated. At this time, the marker 301 is on the memory position "1".

The individual information corresponding to the memory position selected by the marker 301 is for carrying out the registration to the telephone P1, the deletion, and the transmission of a call.

And, music scale data for forming the retrieving tone data for the retrieving tones are stored in a determined area of the RAM area of the memory 4.

The music scale data are of numeric data to show such as a dividing ratio for getting a frequency of a desired musical interval by dividing the system clock of the micro computer 2, a sound generating time period, and the number of sound generating times. And, in case of getting a desired musical interval by changing a readout velocity of wave pattern data of musical instrument, numeric data showing the readout velocity substitutes for the dividing ratio.

In the present embodiment, the music scale data consist of only 7 sounds of a major scale, as shown in FIG.4.

A user can set a desired melody as a retrieving tone (a word "retrieving tone" is used herein even in case of a melody) by combining the tones of the music scale data by the use of the operating panel 1. With the above, retrieving tone data are stored in a determined area of the RAM area of the memory 4, which retrieving tone data have a connection with a corresponding mark.

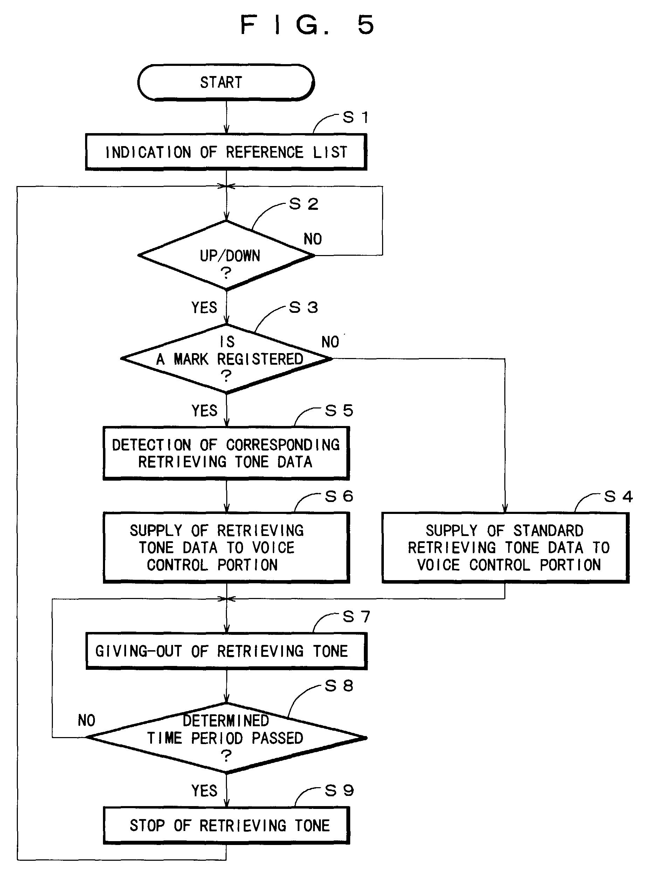

Next, the control operation of the micro computer 2, wherein a retrieving tone is given out correspondingly to a phone number of the selected other party during a user is referring to a phone number of the other party by using the reference list, is described using a flow chart of FIG.5.

FIG.5 is a flow chart showing a flow of the control operation carried out by the micro computer 2 when a user retrieves (i.e. looks up) a phone number of the other party and the corresponding individual information by means of the reference list.

In such a case, a user pushes first the telephone directory button 105 in a usual transmission-and-reception state that the power button 101 of the operating panel 1 of the telephone P1 is ON, and then the micro computer 2 starts the control operation for the retrieval operation of the reference list and the flow proceeds to Step S1.

In Step S1, the micro computer 2 makes the indicating portion 3 indicate the phone number and the other party information as individual information for the phone number both stored in the memory table of the memory 4, makes the marker 301 surround "No." indicated in the memory position column 302 so as to indicate various information registered to the telephone P1 as the reference list, and then the flow proceeds to Step S2.

In Step S2, the micro computer 2 waits for an input of the UP-button 110 or the DOWN-button 111. After detecting the input of the UP-button 110 or the DOWN-button 111, the micro computer 2 makes the indicating portion 3 indicate the phone number and the other party information according to the input. In this state, position of the marker 301 is shifted so that a memory position to be indicated with the marker 301 is selected.

In Step S3, the micro computer 2 judges whether a mark is registered in with the reference list correspondingly to the selected memory position by the marker 301.

If a mark has not been registered correspondingly to the memory position, the flow proceeds to Step S4, and then the flow proceeds to Step S7 after having supplied the standard retrieving tone data stored in the memory 4 to the voice control portion 5 as the retrieving tone data for the corresponding memory position.

On the contrary, if a mark has been registered correspondingly to the memory position, the flow proceeds to Step S5. In Step S5, the retrieving tone data stored in the memory table of the memory 4 correspondingly to the mark is detected as the retrieving tone data for the memory position, and then the flow proceeds to Step S6.

In Step S6, the standard retrieving tone data having detected at Step S5 are supplied to the voice control portion 5. And then, the flow proceeds to Step S7.

In Step S7, the micro computer 2 controls the voice control portion 5 to convert the supplied retrieving tone data to an aural signal. Specifically, when the flow has proceeded from Step S4 to Step S7 as described above, the retrieving tone data is converted into an aural signal, and the retrieving tone which agrees with the standard incoming tone is given out from the speaker 6.

Or, when the flow proceeds to Step S7 through Step S6, the retrieving tone data is converted into an aural signal, and the retrieving tone basing on the retrieving tone data is given out from the speaker 6.

Following the above, the flow proceeds to Step S8.

In Step S8, the micro computer 2 judges whether a determined time (for example, for two seconds) has passed since the retrieving tone in Step S7 started so that the retrieving tone is given out continuously during the determined time period. After the determined time period has passed, the flow proceeds to Step S9 to stop the retrieving tone. After the above, the flow proceeds to Step S2 to repeatedly carry out the above steps similarly.

Because the micro computer 2 carries out above-described control operation, a user can select each of the memory positions in the reference list by shifting the marker 301 by the UP-button 110 or by the DOWN-button 111. And, when a mark is registered correspondingly to the memory position selected by the marker 301, because a retrieving tone according to the retrieving tone data corresponding to the mark is generated, a user can promptly recognize the other party of the phone number only by listening to the retrieving tone without looking at the indication on the indicating portion 3 during the reference of the reference list, based on the recognition of the other party through the phone number.

Here, when a user want to finish the retrieving operation using the reference list on the way, the clear button 106 be pushed. By pushing the clear button 106, because the micro computer 2 returns the telephone P1 to a transmission-and-reception waiting state even at any step in the flow chart of FIG.5, the retrieving operation is forcibly brought into a closed.

Or, a user can call the other party of the phone number at the memory position marked with the marker 301 by means of pushing the call button 102 while referring to the reference list.

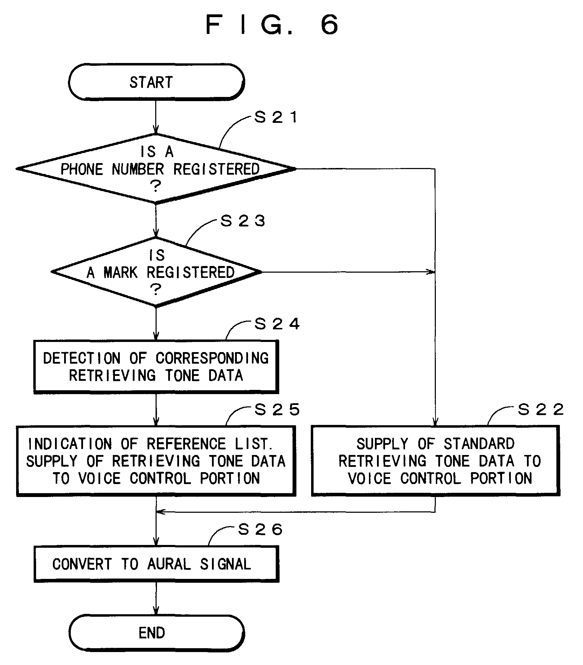

Next, the control operation of the micro computer 2, wherein an incoming tone is given out correspondingly to a phone number of the other party, is described using a flow chart of FIG.6.

FIG.6 is a flow chart showing a flow of the control operation carried out by the micro computer when the telephone P1 received a call.

First of all, when the transmitting-receiving portion has received a signal sent from the other party in the usual transmission-and-reception state that the power button 101 of the operating panel 1 of the telephone P1 is ON, an incoming signal is output to the micro computer 2 from the transmitting-receiving portion. On receiving the incoming signal, the micro computer 2 starts the control operation of FIG.6 and the flow proceeds to Step S21.

In Step S21, the micro computer 2 recognizes a phone number of the other party based on the incoming signal and judges whether or not the phone number is already registered to the reference list. When the micro computer 2 has judged that the phone number is not registered to the reference list, the flow proceeds to Step S22. In Step S22, the standard incoming tone data stored in the memory 4 is supplied to the voice control portion 5 as the incoming tone data for the phone number. And, the flow proceeds to Step S26.

On the contrary, when the micro computer 2 has judged that the phone number is registered to the reference list at Step S21, the flow proceeds to Step S23, wherein the micro computer 2 judges whether or not a mark is registered for the phone number. When the micro computer 2 has judged that the mark is not registered to the phone number, the flow proceeds to Step S22. In Step S22, the standard incoming tone data stored in the memory 4 is supplied to the voice control portion 5 as the incoming tone data for the phone number, as described above. And similarly, the flow proceeds to Step S26.

When the micro computer 2 has judged that a mark is registered correspondingly to the phone number at Step S23, the flow proceeds to Step S24, wherein the micro computer 2 detects the retrieving tone data stored in the memory table of the memory 4 correspondingly to the mark corresponding to the phone number. And, the flow proceeds to Step S25.

In Step S25, the micro computer 2 makes the indicating portion 3 indicate the reference list. At this time, the phone number of the incoming other party and the other party information are indicated at the corresponding memory position.

Also, in Step S25, the retrieving tone data having detected in Step S24 is supplied to the voice control portion 5. And, the flow proceeds to Step S26.

In Step S26, the micro computer 2 controls the voice control portion 5 to convert the supplied retrieving tone data into an aural signal. Specifically, when the flow proceeds from Step S22 to Step S26 after the standard incoming tone data has been supplied to the voice control portion 5, the micro computer 2 controls to give out the standard incoming tone from the speaker 6 as the incoming tone after converting the standard incoming tone data into an aural signal.

And, when the flow proceeds from Step S25 to Step S26 after the retrieving tone data, which corresponds to the mark stored in the memory 4 correspondingly to the phone number of the incoming other party, has been supplied to the voice control portion 5, the micro computer 2 controls to give out the incoming tone which agrees with the retrieving tone basing on the retrieving tone data from the speaker 6 after converting the retrieving tone data into an aural signal.

After the micro computer 2 has carried out the control operation of giving out the incoming tone according to the incoming phone number in Step S26, this flow chart completes.

Because the micro computer 2 carries out the above-described control operation, when the telephone P1 gets the incoming, the incoming can be informed by means of the incoming tone according to the phone number. Further, when the above phone number is registered along with the mark in the reference list, because a user is informed of the incoming by the use of the incoming tone which agrees with the retrieving tone to be given out on the basis of the retrieving tone data stored in the memory 4 correspondingly to the mark, the other party can be promptly recognized.

And, a user can securely confirm the phone number of the incoming call or its individual information by checking at least either one or both of the phone number positioned at the memory position with the marker 301 to be indicated on the indicating portion 3 at the incoming and the individual information related to the phone number.

According to the present invention as described above, because a retrieving tone to be given out upon retrieval correspondingly to a retrieving phone number and an incoming tone to be given out upon incoming from the other party of the above phone number are agreed with each other, a user can strongly recognize the agreement between the retrieving tone for the phone number stored in the storing means and the incoming tone. And, because a user can strongly recognize the agreement between the retrieving tone and the incoming tone, when a user makes a phone call by the use of the telephone directory function, the retrieval of the phone number can be promptly recognized by listening to the corresponding retrieving tone. And, because the incoming tone which agrees with the retrieving tone can be listened to, the other party to whom the retrieving tone is given can be promptly recognized only by listening to the incoming tone.

And, a user can securely confirm the phone number of the incoming call or its individual information by checking at least either one or both of the phone number indicated on the indicating means at the incoming and the individual information related to the phone number.

Further, because a retrieving tone corresponding to the mark is generated, a user can promptly recognize the other party of the phone number only by listening to the retrieving tone without looking at the indication on the indicating portion.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

## Claims

1. A telephone comprising:
a storing means for storing phone numbers; and
a retrieving means for retrieving an optional phone number out of said phone numbers stored in said storing means,
wherein a retrieving tone to be given out at a retrieval correspondingly to said optional phone number agrees with an incoming tone to inform of an incoming from a party having said optional phone number.

2. The telephone as set forth in claim 1, further comprising:
an indicating means for indicating at least either one or both of a phone number and individual information related to said phone number,
wherein said indicating means indicates at least either one or both of said phone number and said individual information related to said phone number at said retrieval or at said incoming.

3. The telephone as set forth in claim 2, wherein
a plurality of marks capable of being indicated on said indicating means are pre-stored, and said marks have respective retrieving tones to be different to each other and are registered correspondingly to said phone numbers stored in said storing means so that said phone numbers have said respective retrieving tones being same as respective incoming tones.
